# EUROPÄISCHE PATENTANMELDUNG

(11) **EP 2 633 979 A1**
(43) Veröffentlichungstag der Anmeldung: **04.09.2013**
(21) Anmeldenummer: 13156909.7
(22) Anmeldetag: 27.02.2013
(51) Int. Cl.: B29C 70/50, B29C 70/68, B29B 11/16, B32B 5/28, B32B 15/08, B32B 15/14

(54) **Halbzeug für die Herstellung eines Faserverbund-Metallhybridlaminats und Verfahren zur Herstellung eines derartigen Halbzeuges**

(30) Priorität: 28.02.2012 DE 102012003731
(71) Anmelder: Deutsches Zentrum für Luft- und Raumfahrt e.V., 51147 Köln (DE)
(72) Erfinder: Fink, Axel, 86609 Donauwört (DE); Kolesnikov, Boris, 38104 Braunschweig (DE); Stefaniak, Daniel, 31224 Peine (DE); Hühne, Christian, 30173 Hannover (DE); Borgwardt, Henrik, 38118 Braunschweig (DE)
(74) Vertreter: Ahrens, Gabriele

(57) **Zusammenfassung**

Die vorliegende Erfindung betrifft ein Halbzeug für die Herstellung von Faserverbund-Metallhybridlaminaten, wobei das Halbzeug mindestens eine Metallschicht (4) und auf der Metallschicht (4) angeordnet eine Harzschicht aufweist, wobei die Harzschicht mit einem Fasermaterial (2) verstärkt sein kann und ein Faserverbund-Prepreg (1) darstellt. Insbesondere betrifft die vorliegende Erfindung damit ein Faserverbund-Prepreg (1), das mit einer Metallfolie (2) verstärkt und verbunden ist.

## Beschreibung

Die vorliegende Erfindung betrifft Halbzeuge für die Herstellung eines Faserverbund-Metallhybridlaminats und Verfahren zur Herstellung eines derartigen Halbzeuges.

Faserverbund-Metallhybridlaminate, auch als Hybridlaminate bezeichnet, sind aus mindestens einer Schicht eines Faserverbundkunststoffes und zusätzlich einer Metallschicht aufgebaut, die abwechselnd geschichtet und zusammen polymerisiert werden.

Faserverbundkunststoffe und Verfahren zu deren Herstellung sind allgemein bekannt. Sie bestehen aus Verstärkungsfasern, die in einer Harzmatrix eingebettet sind. Die Verstärkungsfasern können aus vielfältigen Materialien bestehen. Bekannte Beispiele sind kohlenstofffaserverstärkte Kunststoffe (CFK) und glasfaserverstärkte Kunststoffe (GFK).

Geschichtete Metallhybride werden zunehmend für die Herstellung von Leichtbaustrukturen, insbesondere für die Luft- und Raumfahrt, eingesetzt. Typische Leichtbaustrukturen wie sie in der Luft- und Raumfahrt eingesetzt werden, sind z. B. Behäutungen und Versteifungselemente.

Der Einsatz von geschichteten Hybridlaminaten bietet eine optimale Lösung, um sowohl die Eigenschaften von reinem Metall einerseits und die Eigenschaften von reinen Faserverbundwerkstoffen andererseits zu verbessern.

Durch geeignete Kombination von Schichten der beiden Werkstoffe und ihren Anteilen im Laminat sowie der Anordnung der Schichten lassen sich gewünschte Eigenschaften gezielt einstellen.

So konnte eine Verbesserung der Ermüdungseigenschaften und der Schadenstoleranz von Metallen durch Kombination von Aluminiumschichten mit Schichten aus glasfaserverstärkem Kunststoff bzw. aramidfaserverstärktem Kunststoff erzielt werden (GLARE "Glas Fiber Reinforced Aluminium" bzw. ARALL "Ararmid Fiber Reinforced Aluminium"). Für Anwendungen mit besonderer thermomechanischer Beanspruchung wurde eine Kombination aus Schichten aus Titan und kohlenstofffaserverstärkten Kunststoffen entwickelt (HTCL "Hybrid Titanium Composite Laminate").

Mithilfe der Hybridisierung lassen sich Nachteile von reinen Faserverbundwerkstoffen beheben, die deren Anwendungsmöglichkeiten häufig eingeschränkt haben.

So wird durch die Einbettung von Metallschichten in das Faserverbundlaminat die Tragfähigkeit von mechanischen Fügestellen deutlich verbessert. Beispielsweise wird in EP 1 082 217 B1 ein Faserverbund-Metallhybrid vorgeschlagen, bei dem im Bereich der Fügestellen eine metallische Verstärkung eingebracht ist. Dafür sind in einzelnen Schichten aus Faserverbundkunststoff des Laminats im Verbindungsbereich Unterbrechungen bzw. Lücken vorgesehen, in die Metallfolienstücke eingepasst sind. Im Ergebnis wird ein Laminat erhalten, das durchgängige Schichten aus Faserverbundkunststoff sowie Schichten enthält, die aus Bereichen aus Faserverbundkunstoff und Bereichen aus Metall bestehen.

Reine Faserverbundlaminate zeigen sich zudem häufig gegenüber Umgebungseinflüssen wie Wasser, Feuchtigkeit, UV-Lichteinstrahlung sowie mechanischen Einwirkungen als nur unzureichend beständig. Es wurde daher in WO 2007/0482426 A1 und in EP 2 047 979 A1 vorgeschlagen, die Faserverbundlaminate durch Aufbringen von Schutzschichten aus Metall bzw. Vorsehen einer metallischen Barriereschicht vor schädlichen Außeneinflüssen zu schützen.

Für die Herstellung der vorstehend aufgeführten Hybridlaminate wird einerseits vorbehandeltes Metallblech und andererseits vorimprägniertes Faserhalbzeug, auch als Prepreg bekannt, als Ausgangskomponenten bereit gestellt. Das Hybridlaminat wird dann schichtweise durch Ablegen beider Ausgangskomponenten in der gewünschten Reihenfolge und Anzahl aufgebaut. Das Ablegen der Schichten erfolgt einzeln manuell oder automatisch. Durch anschließende Aushärtung unter Einwirkung von Temperatur und Druck wird der Schichtaufbau konsolidiert.

Zwischen der Ablage der Schichten und dem Aushärten können Umformschritte zur gezielten Formgebung durchgeführt werden, wie es beispielsweise in EP 1 336 469 A1 beschrieben ist.

Für die Herstellung eines Hybridlaminats aus Titan und kohlenstofffaserverstärkten Kunststoff, so genannte TiGr-Laminate (Titaniumgraphit), ist ein automatisches Ablegeverfahren entwickelt worden, mit dem diese Schichten alternierend abgelegt und durch thermische Einwirkung ausgehärtet werden.

In EP 0 522 663 A1 ist die kontinuierliche Fertigung eines Hybridlaminats beschrieben, das daraus hergestellten Bauteilen einen verbesserten Blitzschutz bietet. Als Ausgangskomponenten werden kontinuierliche Rollwaren aus einem Faserverbundprepreg einerseits und einer Metallschicht andererseits, die ein Blech oder eine Maschenware sein kann, eingesetzt. Im Hinblick auf die Blitzschutzanforderungen besteht die Metallschicht aus einem elektrisch leitenden Material, nämlich Kupfer, Aluminium, Nickel oder Silber. In einem kontinuierlichen Prozess werden das trockene Faserhalbzeug, ein Harzfilm und die Metallschicht sowie ggf. weitere funktionale Schichten aufeinander geschichtet. Die erforderliche separate Zuführung der einzelnen Komponenten macht die Fertigung jedoch aufwändig.

Auch ist ein kontinuierliches Verfahren bekannt, bei dem Prepregbänder einerseits und Metallbleche andererseits eingeführt und komplett ausgehärtete und zugeschnittene Platten gefertigt werden, wobei die Metallbleche die Außenschichten bilden.

Die hier erhaltenen Platten sind als Halbzeuge für die Fertigung von Hybridlaminaten mit beliebiger Form und Aufbau ungeeignet, da sie bereits ausgehärtet sind und damit kaum mehr umgeformt werden können. Weiter ist mit den unbeschichteten Metallaußenschichten ein mehrfach geschichteter Aufbau nicht mehr ohne Weiteres möglich.

Prepregs, wie sie für die Herstellung von Faserverbundkunststoffen und Hybridlaminaten eingesetzt werden, sind an sich bekannt. Sie sind mit dem noch nicht ausgehärteten Matrixmaterial vorimprägnierte Faserhalbzeuge, die mittels Schmelzharzimprägnierung oder Lösungsmittelimprägnierung erhältlich sind.

Für die Schmelzharzimprägnierung wird ein vorgefertigter Harzfilm eingesetzt. Der Harzfilm wird hergestellt, indem das geschmolzene Material für die Harzmatrix auf einer Trägerfolie aus Kunststoff oder Papier aufgerakelt wird. Der auf der Trägerfolie aufgebrachte Film kann dann als Rollware für die weitere Verwendung bereit gehalten werden. Für die Imprägnierung werden die Fasern auf dem Harzfilm abgelegt, wobei beheizte Walzen das Harz auf Schmelztemperatur bringen und durch den Walzendruck eine intensive Durchtränkung der Faserfilamente bewirkt wird. Typischerweise enthält der Harzfilm bereits erforderliche Härter und/oder ggf. weitere Zuschlagstoffe, die für die Ausbildung der fertigen Harzmatrix erforderlich sind. Eine Aushärtung der Harzmatrix des vorimprägnierten Faserhalbzeugs erfolgt jedoch erst im Rahmen der Weiterverarbeitung dieser Halbzeuge.

Die erhaltenen Prepregbahnen können dann für die diskontinuierliche oder kontinuierliche Herstellung von Faserverbundkunststoffen oder Faserverbund-Metallhybridlaminate eingesetzt werden.

Ein Nachteil der vorstehend genannten Herstellungsverfahren für die Hybridlaminate ist, dass Metall und Faserverbundmaterial separat - entweder manuell oder maschinengestützt - für die Schichtung des Laminats zugeführt werden müssen. Durch die separate Zuführung erhöht sich, insbesondere bei der automatischen Ablage, die Komplexität des Prozesses und der Anlagen. Die separate Zufuhr von Metall einerseits und Faserverbundmaterial andererseits hat sich insbesondere für Strukturelemente mit stark eindimensionaler Gestalt oder für Strukturen, die nach der Wickeltechnik hergestellt werden, als unzweckmäßig erwiesen.

Auch bei der Handhabung und in der Ablegequalität gibt es nach wie vor Probleme und eine Verbesserung wäre wünschenswert.

Im Hinblick auf die Nachteile des Standes der Technik war es daher wünschenswert, eine Möglichkeit bereit zu stellen, mit der die Fertigungsverfahren für Hybridlaminate vereinfacht werden können. Weiter sollte insbesondere auch die automatische Schichtung vereinfacht werden.

Auch war es wünschenswert, ein Halbzeug für die Fertigung von geformten Hybridlaminaten bereit zu stellen, das eine verbesserte Umformung erlaubt. Zudem sollte das Halbzeug auf einfache Art und Weise einen mehrfach geschichteten Aufbau ermöglichen.

Gemäß der vorliegenden Erfindung wird diese Aufgabe durch ein Halbzeug für die Herstellung von Faserverbund-Metallhybridlaminaten gelöst, wobei das Halbzeug mindestens eine Metallschicht aufweist, wobei auf mindestens einer Seite der Metallschicht eine härtbare, aber noch unausgehärtete Harzschicht aufgebracht ist, und wobei die mindestens eine Metallschicht mit der Harzschicht verbunden ist.

Erfindungsgemäß wirkt die mindestens eine Metallschicht in dem Halbzeug als Trägermaterial für die noch unausgehärtete Harzschicht. Die Metallschicht kann in die Harzschicht eingebettet oder als Decklage angeordnet sein. Dieser Aufbau aus Metallschicht und Harzschicht wird nachstehend auch als Harz-Metall-Halbzeug bezeichnet.

Gemäß einem weiteren Aspekt betrifft die vorliegende Erfindung ein Halbzeug wie es vorstehend genannt ist, wobei in mindestens einer der Harzschichten Fasern oder andere textile Gewebe vorgesehen sind.

Ein Halbzeug nach dieser Ausführungsform ist ein Prepreg, das eine Metallschicht aufweist, entsprechend wird es nachstehend auch als "Faser-Metall-Prepreg" bezeichnet.

Das erfindungsgemäße Halbzeug, mit oder ohne Fasern, stellt einen Verbund aus Metallschicht und Harzschicht dar.

Gemäß einem weiteren Aspekt betrifft die vorliegende Erfindung Halbzeuge der vorstehend genannten Art in Form von Rollware.

Weiter betrifft die vorliegende Erfindung ein Verfahren, insbesondere ein kontinuierliches Verfahren, zur Herstellung von Halbzeugen der vorstehend genannten Art.

Die erfindungsgemäßen Halbzeuge eignen sich in vorteilhafter Weise für die Herstellung von Faserverbund-Metallhybridlaminaten, indem, je nach Bedarf, eine beliebige Anzahl der erfindungsgemäßen Halbzeuge aufeinandergeschichtet und der erhaltene Schichtaufbau durch Druck- und/oder Wärmeeinwirkung konsolidiert wird.

Ein weiterer Vorteil der vorliegenden Erfindung ist, dass Materialien, Vorgehensweisen und Vorrichtungen eingesetzt werden können, wie sie aus der Prepregherstellung und Faserverbund-Metallhybrid-Technologie Stand der Technik und bekannt sind.

Insbesondere für die Prepregherstellung wird beispielhaft auf M. Flemming et al. "Faserverbundbauweisen - Halbzeuge und Bauweisen", Springer-Verlag, Berlin, Heidelberg, 1996 verwiesen.

Die Herstellung der erfindungsgemäßen Halbzeuge wird insbesondere dadurch effizient, dass die Metallfolien bereits im Herstellungsprozess des Harzfilmes, wie er für die Herstellung von Prepregs benötigt wird, integriert werden können.

Für die vorliegende Erfindung kann prinzipiell jedes Harzmaterial eingesetzt werden, das für die Herstellung von Prepregs geeignet ist.

Beispiele für geeignete Kunststoffe für die Harzmatrix sind härtbare thermoplastische und duroplastische Kunststoffe.

Als Fasermaterial können Kurz-, Lang-, Endlosfasern oder andere textile Gewebe wie sie aus der Faserverbundwerkstofftechnologie bekannt sind, eingesetzt werden.

Es können Kurzfasern mit einer Länge in einem Bereich von 1 mm bis 50 mm eingesetzt werden.

Je nach Bedarf können die Fasern gerichtet oder ungerichtet vorliegen. Es können unidirektional ausgerichtete Endlosfasern eingesetzt werden.

In unterschiedlichen Faserverbundschichten eines Laminats können die Fasern in verschiedenen Orientierungen ausgerichtet vorliegen.

Das Fasermaterial kann aus Glas, Kohlenstoff, Keramik, Bor, Stahl, Naturstoff oder auch Kunststoffen wie Aramid, PBO oder UHMWPE sein.

Mit Kurzfasern kann die Strukturdämpfung von Strukturelementen aus Faserverbund-Metallhybridlamaterial verbessert werden. Zudem ermöglichen sie eine Drapierbarkeit in Faserrichtung.

Beispiele für geeignete Metalle für die Metallschicht sind Titan, Legierungen davon, Stahl, Kobaltlegierungen, generell Leichtmetalle wie z. B. Aluminium etc.. Die Dicke der Metallschicht kann je nach Bedarf gewählt werden. Übliche Dicken liegen zwischen 0,01 mm und 0,2 mm.

Die Breite des erfindungsgemäßen Halbzeuges kann gleichfalls je nach Bedarf gewählt werden, liegt jedoch üblicherweise zwischen 1 mm und 500 mm.

Besonders vorteilhaft ist, dass die Herstellung des erfindungsgemäßen Halbzeuges nach einem konventionellen Prepreg-Herstellungsprozess durch Schmelzharzimprägnierung erfolgen kann. Hierbei wird auf an sich bekannte Art und Weise ein Film aus noch ungehärtetem Matrixmaterial auf der Metallschicht als Trägermaterial aufgebracht.

Der Harzfilm und die Metallschicht können durch Einwirkung von Wärme und/oder Druck miteinander verbunden werden. Ein separater Klebstoff ist für die Verbindung nicht erforderlich.

Wie für die Prepregherstellung typisch, kann der Harzfilm bereits alle Komponenten, die für die endgültige Erzeugung der fertigen Matrix erforderlich sind, wie Kunststoff, Härter und ggf. weitere Zuschläge, enthalten.

Der Harzfilm kann nur auf einer Seite der Metallschicht oder auf beiden Seiten aufgetragen werden, so dass das Metall sozusagen in dem Harzmaterial eingebettet vorliegt.

Gemäß einer weiteren Ausführungsform kann auf der Harzschicht das Fasermaterial aufgebracht werden, das dann durch Walzendruck und/oder Temperatureinwirkung mit dem Harz benetzt wird. Anschließend kann das Faser-Metall-Prepreg abgekühlt werden, um die Vernetzungsneigung zu reduzieren und die Haltbarkeit zu verlängern.

Die nach der Schmelzharzimprägnierung erhaltenen Metall-Harz-Halbzeuge bzw. Faser-Metall-Prepregs sind als lange Bänder erhältlich. Die Bänder können, ggf. mit Schutzfolie versehen, aufgerollt und als Rollware für die spätere Verarbeitung gelagert werden.

Die Bänder können in schmale Endlosstreifen geschnitten werden, die dann als Halbzeug für die Fertigung von Bauteilen z. B. nach einem Fiber Placement, Tow Placement oder Wickelfertigungsprozess eingesetzt werden können.

In denjenigen Ausführungsformen, in denen das Metall-Harz-Halbzeug auf beiden Seiten der Metallfolie einen Harzfilm aufweist, kann ein Faser-Metall-Prepreg hergestellt werden, das sowohl eine Metallfolie in der Mitte, zwei Metallfolien als Decklage oder einen mehrschichtigen Aufbau aufweist.

Es sind Ausführungsformen möglich, bei denen das Faser-Metall-Prepreg auf beiden Seiten eine Metallfolie als Decklage aufweist, wobei die Metallfolien auf ihrer freien Oberfläche einen weiteren Harzfilm aufweisen können. Durch Aufeinanderschichten dieser Faser-Metall-Prepregs ist ein Aufbau möglich, bei dem Metall an Metall vorliegt. Durch diese Maßnahme wird der Metallgehalt des resultierenden Hybridlaminats erhöht.

Gleichzeitig resultiert aus dieser Diskretisierung einzelner Metalllagen in zwei separate, aufeinander haftende Einzelfolien eine größere Anzahl an Rissflächen und Verringerung der Dicke der einzelnen Metallfolien, wodurch eine Verbesserung der Ermüdungs- und Schadenstoleranz erzielt wird.

Die Herstellung von Hybridlaminaten unter Verwendung von trockenem Faserhalbzeug, d. h. Faserhalbzeug, das nicht vorimprägniert ist, vereinfacht sich insbesondere dadurch, dass das vorstehend beschriebene Harz-Metall-Halbzeug direkt eingesetzt werden kann. Dadurch ist bei der Herstellung der Struktur mittels der üblichen Wickeltechniken, Pultrusionen, Pressverfahren und Resin Transfer Molding (RTM) keine separate Zusammenführung von Harzfilm, Metallfolie und Faserhalbzeug mehr erforderlich. Analog zu dem üblichen Harzfilmimprägnierverfahren durchtränkt das Harz bei der Konsolidierung das trockene Faserhalbzeug. Dabei können in der oder den Metallfolie(n) Perforationen vorgesehen sein, die das Austreten von ggf. eingeschlossener Luft erleichtern.

Das Metallblech oder die Metallfolie, wie sie erfindungsgemäß eingesetzt wird, kann vor Beschichtung mit dem Harzfilm einer Oberflächenbehandlung unterzogen werden, um eine Verbesserung der Stabilität und Festigkeit der Haftung zwischen dem Harz und der Metalloberfläche zu erzielen sowie als Korrosionsschutz. Geeignete Verfahren zur Oberflächenbehandlung von Metallschichten für die Herstellung von Faserverbund-Metallhybridlaminaten sind bekannt.

Oberflächenbehandlungen können z. B. Anodisierungsverfahren, Silanisierung, Flammenpyrolyse, Sol-Gel-Verfahren und Primerbeschichtungen sein. Diese Verfahren bewirken insbesondere eine Verbesserung der Anbindung des Harzes an die Metalloberfläche.

Durch den Einsatz von Metallfolien, die mit einem Harzfilm versehen sind, als Decklagen kommt bei der Schichtung einzelner Lagen Harzfilm an Harzfilm zu liegen, so dass sich die Klebeeigenschaften beim Laminieren der Strukturen verbessern.

Die Metallfolie der erfindungsgemäßen Harz-Metall-Halbzeuge wirkt bei dem kontinuierlichen Herstellungsprozess von Prepregs als stabiles reißfestes Trägermaterial. Zudem erleichtert sie die Handhabung der Prepregs bei der Fertigung von Strukturen daraus. Dies ist insbesondere bei der Herstellung von Prepregs mit in einer Richtung gerichteten Kurzfasern von großem Vorteil.

Die erfindungsgemäßen Halbzeuge zeichnen sich, wie für Halbzeuge typisch, dadurch aus, dass sie sich in einem lagerbaren und konfektionierbaren Zustand befinden. Sie haben den Vorteil, dass sie unabhängig von ihrer Herstellung später, zum Beispiel auch an einem anderen Ort, weiterverarbeitet werden können.

Die erfindungsgemäßen Halbzeuge können mit herkömmlichen Halbzeugen kombiniert werden, wie sie für die Herstellung von Faserverbundwerkstoffen und Hybridlaminaten bekannt sind. Sie können Prepregs, Faserverbundschichten, weitere Metallschichten etc. aufweisen.

Die vorliegende Erfindung wird nachstehend unter Verweis auf die anliegenden Figuren näher erläutert werden. Im Folgenden werden mit Harzmaterial vorimprägnierte Faserschichten als "Faserverbundschichten" bezeichnet. Es zeigt dabei
- **Figur 1**: ein Beispiel für eine Ausführungsform eines erfindungsgemäßen Faser-Metall-Prepregs mit einer Metallschicht und einer darauf aufgebrachten Faserverbundschicht;
- **Figur 2**: eine Abwandlung eines Faser-Metall-Prepregs nach Figur 1;
- **Figur 3**: eine weitere Ausführungsform, wobei auf beiden Seiten der Metallschicht eine Faserverbundschicht angeordnet ist;
- **Figur 4**: ein weiteres Beispiel für eine Ausführungsform des erfindungsgemäßen Faser-Metall-Prepregs;
- **Figur 5**: ein erfindungsgemäßes Harz-Metall-Halbzeug, wobei auf beiden Seiten einer Metallschicht eine Harzschicht aufgebracht ist;
- **Figur 6**: ein Harz-Metall-Halbzeug nach Figur 5, wobei in der Metallschicht Perforationen vorgesehen sind;
- **Figur 7a**: ein Beispiel für einen mehrschichtigen Aufbau aus mehreren Metallschichten und Faserverbundschichten;
- **Figur 7b**: ein weiteres Beispiel für einen mehrschichtigen Aufbau;
- **Figur 8**: schematisch eine Vorrichtung und ein Verfahren zur Herstellung eines erfindungsgemäßen Harz-Metall-Halbzeugs;
- **Figur 9**: schematisch eine alternative Vorgehensweise zur Herstellung des erfindungsgemäßen Harz-Metall-Halbzeugs;
- **Figur 10**: ein Herstellungsverfahren für ein erfindungsgemäßes Faser-Metall-Prepreg unter Verwendung der Harz-Metall-Halbzeuge nach Figuren 5 oder 6;
- **Figur 11**: schematisch eine Ausgestaltung des Verfahrens nach Figur 10;
- **Figur 12**: schematisch ein Herstellungsverfahren für ein Faser-Metall-Prepreg;
- **Figur 13**: ein Beispiel für ein Bauteil, das unter Einsatz der erfindungsgemäßen Faser-Metall-Prepregs hergestellt werden kann; und
- **Figur 14**: schematisch ein Beispiel für eine weitere Verarbeitungsmöglichkeit der erfindungsgemäßen Faser-Metall-Prepregs.

In den Figuren bedeuten dieselben Bezugszeichen dieselben oder ähnliche Komponenten oder Elemente.

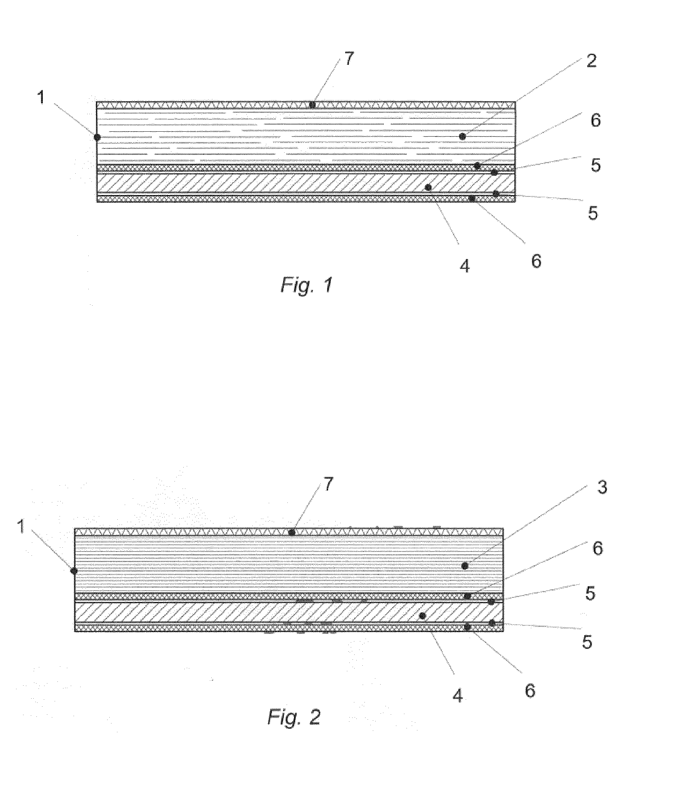

In **Figur 1** ist ein Beispiel für ein erfindungsgemäßes Faser-Metall-Prepreg gezeigt, bei dem eine Faserverbundschicht 1 mit angedeuteten Fasern 2, die in einer Harzmatrix eingebettet sind, auf einer Seite einer Metallschicht 4 aufgebracht sind. Bei den in der Faserverbundschicht 1 enthaltenen Fasern 2 handelt es sich um Kurz- oder Langfasern, wie durch die Unterbrechungen der jeweiligen Linien angedeutet ist.

Die Verwendung von gerichteten Kurzfasern erleichtert die Verformung in Faserrichtung, so dass dieses Halbzeug besonders für Umformungsprozesse zur Herstellung von Pressteilen geeignet ist.

In der hier gezeigten Ausführungsform sind die Oberflächen beider Seiten der Metallschicht 4 nass- oder trockenchemisch vorbehandelt, so dass modifizierte Grenzschichten 5 ausgebildet sind. Zudem wurde auf beiden Seiten der Metallschicht 4 auf den Grenzschichten 5 eine Primer-Deckschicht 6 aufgebracht.

In dieser Ausführungsform ist die Faserverbundschicht 1 nur einseitig aufgebracht. Die Fasern 2 sind in dem noch nicht ausgehärteten Harz angeordnet. Zum Schutz der freien Oberfläche der Faserverbundschicht 1 kann eine Schutzfolie 7 aufgebracht werden. Die andere Seite ist durch die Metallschicht geschützt.

Eine weitere Ausführungsform eines Faser-Metall-Prepregs mit analogem Aufbau wie in Figur 1 ist in **Figur 2** gezeigt.

Anders als in Figur 1 enthält die Faserverbundschicht 1 gerichtete Endlosfasern 3, wie durch die durchgehend gepunkteten Linien angedeutet ist.

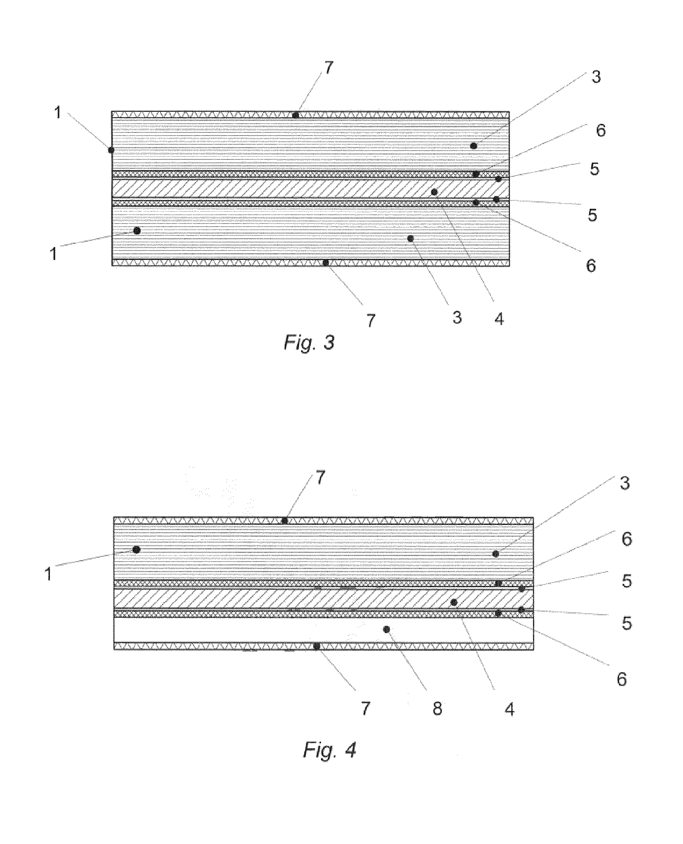

In der in **Figur 3** gezeigten Ausführungsform sind auf beiden Seiten der Metallschicht 4 eines Faser-Metall-Prepregs Faserverbundschichten 1 angeordnet. Zum Schutz der freien Oberflächen der Faserverbundschichten 1 sind jeweils Abdeckfolien 7 vorgesehen.

In **Figur 4** ist eine Variante eines erfindungsgemäßen Faser-Metall-Prepregs gezeigt, mit einem Aufbau aus einer Metallschicht 4, die auf einer Seite mit einer Faserverbundschicht 1 versehen ist, und auf der anderen Seite eine reine, noch nicht mit Fasermaterial verstärkte Harzschicht 8 aufweist, wobei das Harz der Schicht 8 wie das Harz der Faserverbundschicht 1 für die Prepregherstellung geeignet ist und vorzugsweise mit dem Harz der Schicht 1 identisch ist.

Weiter sind wie in Figur 1 beschriebenen, auf beiden Seiten der Metallschicht 4, Grenzschichten 5 und Primerschichten 6 vorgesehen.

Die Harzschicht 8 und die Faserverbundschicht 1 sind nach außen durch Folien 7 geschützt.

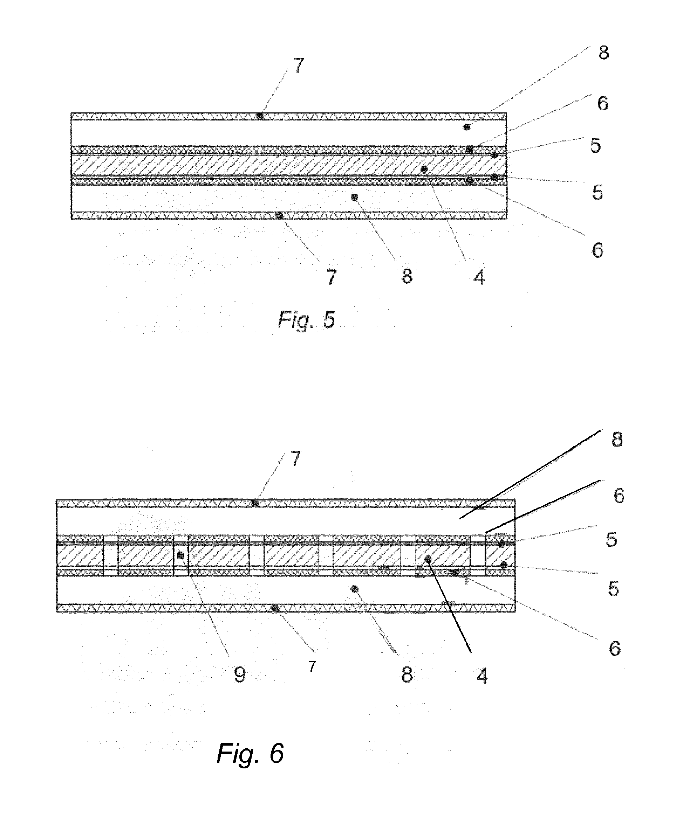

Neben den Faser-Metall-Prepregs wie sie beispielhaft in den Figuren 1 bis 4 gezeigt worden sind, die Faserverbundschichten, d. h. Schichten aus mit Harz vorimprägnierten Fasermaterialien aufweisen, betrifft die vorliegende Erfindung auch Halbzeuge, die aus mindestens einer Metallschicht und mindestens einer Harzschicht für ein Prepreg aufgebaut sind, wobei die Harzschicht noch keine Verstärkungsfasern enthalten. Ein Beispiel hierfür ist in Figur 5 gezeigt.

Die in **Figur 5** gezeigte Ausführungsform eines Harz-Metall-Halbzeug ist aus einer Metallschicht 4 und aus zwei Harzschichten 8 aufgebaut, wobei die jeweils eine Harzschicht 8 auf einer Seite der Metallschicht 4 angeordnet ist. Auch in der hier gezeigten Ausführungsform weist die Metallschicht 4 auf beiden Seiten eine modifizierte Grenzschicht 5 und eine Primerdeckschicht 6 auf.

Die Harzschichten 8 sind unausgehärtet.

Auch hier können die freien Oberflächen der Harzschichten 8 durch Schutzfolien 7 geschützt sein.

Bei der in Figur 6 gezeigten Abwandlung des Harz-Metall-Halbzeugs nach Figur 5 sind in der Metallschicht 4 Perforationen 9 vorgesehen. Falls Grenz- und/oder Primerdeckschichten 5, 6 vorliegen - wie hier gezeigt - ist es zweckmäßig, wenn sich die Perforationen 9 durch diese hindurch erstrecken.

Ein derartiges Halbzeug mit Perforationen in der Metallschicht eignet sich insbesondere für die Herstellung nach dem Nasslaminat-verfahren, wobei ein trockenes Faserhalbzeug verwendet wird. Bei der Imprägnierung der Fasern mit dem Harz kann die zwischen den einzelnen Lagen befindliche Luft bzw. ein möglicher Harzüberschuss durch die Perforationen 9 entweichen.

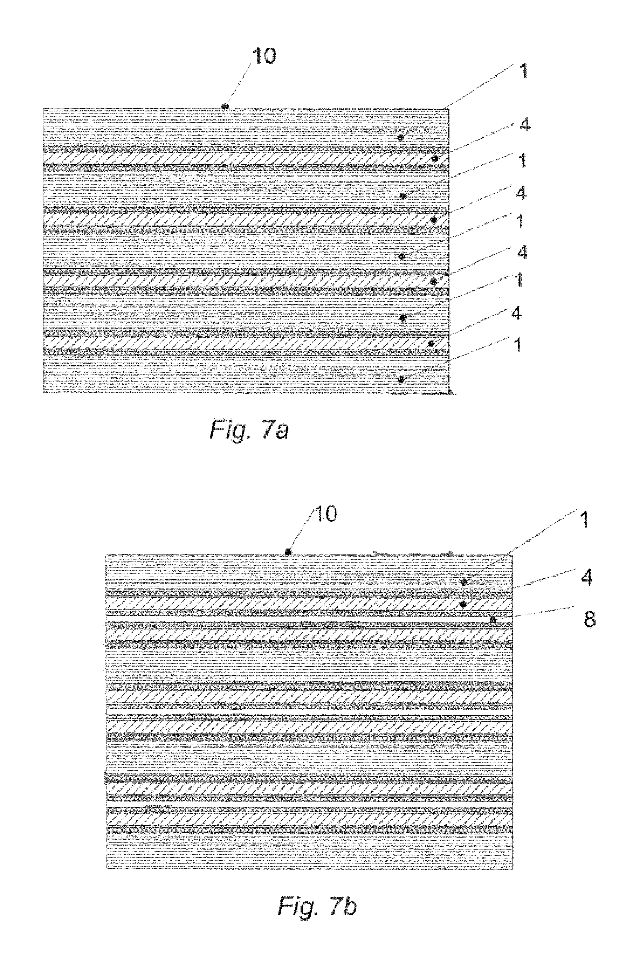

In **Figur 7a** ist ein mehrschichtiger Aufbau 10 gezeigt, der durch mehrmaliges Ablegen der in Figuren 2 oder 3 gezeigten Ausführungsformen eines erfindungsgemäßen Faser-Metall-Prepregs erhalten werden kann. Das in Figur 7a gezeigte Laminat ist abwechselnd aus mehreren Metallschichten 4 und Faserverbundschichten 1 aufgebaut.

In **Figur 7b** ist ein mehrschichtiger Aufbau 10 gezeigt, der durch mehrmaliges Ablegen der in Figuren 2 oder 4 gezeigten Ausführungsformen eines erfindungsgemäßen Faser-Metall-Prepregs erhalten wird. Wie in Figur 7a ist das Laminat aus mehreren Metallschichten 4 und Faserverbundschichten 1 aufgebaut. Anders als in Figur 7a ist jedoch der Metallgehalt des Laminats bei gleicher Dicke höher. Hierbei sind jeweils zwei Metallschichten 4 aneinander gegenüberliegend angeordnet, die durch eine Harzschicht 8 getrennt sind, die vorteilhafterweise möglichst dünn sein sollte.

Die zwischen den Metallschichten 4 befindliche Harzschicht 8 kann aus dem selben Harzmaterial wie das Harzmaterial für die Faserverbundschichten 1 bestehen. Es kann jedoch auch ein davon abweichendes Harzmaterial eingesetzt werden. Beispielsweise kann die zwischen den Metallschichten 4 befindliche Schicht 8 ein polymerer Klebstoff oder ähnliches sein.

Ein derartiger Aufbau kann auch als Halbzeug für den Aufbau weiterer Laminate eingesetzt werden.

Die Verbindung der beiden Faser-Metall-Prepregs erfolgt über die faserfreie Harzschicht 8, die zwischen den Metallschichten 4 benachbarter Faser-Metall-Prepregs angeordnet ist. Die benachbarten Faser-Metall-Prepregs können beide eine faserfreie Harzschicht 8 aufweisen oder aber nur eines der Faser-Metall-Prepregs hat eine Harzschicht 8.

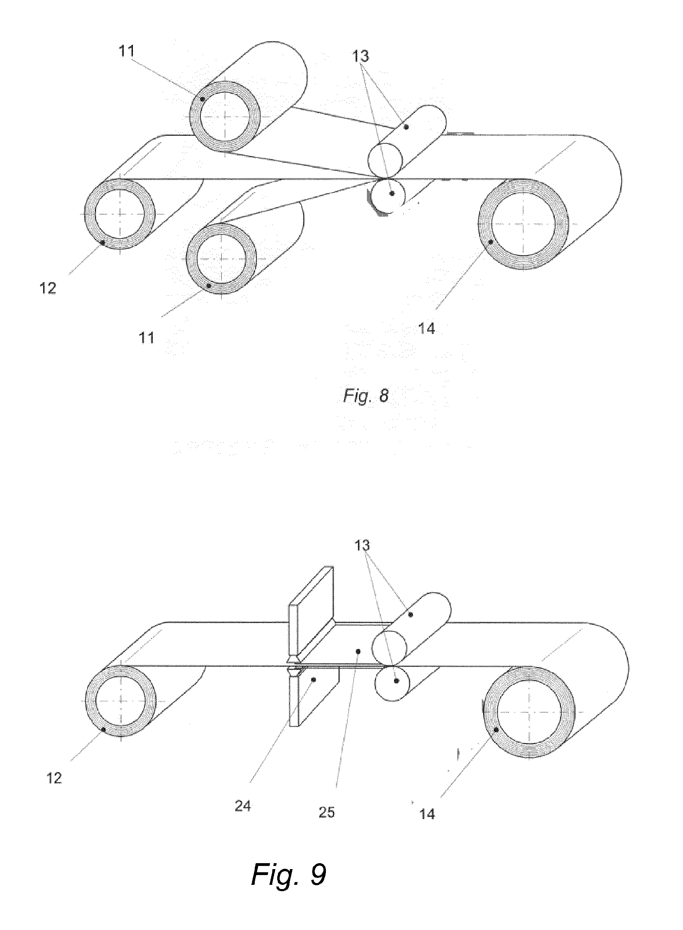

In Figuren 8 bis 12 sind schematisch Verfahren und Vorrichtungen zur Herstellung der erfindungsgemäßen Halbzeuge gezeigt.

In **Figur 8** ist eine prinzipielle Vorgehensweise für die Herstellung eines Harz-Metall-Halbzeugs dargestellt. Ein oder zwei vorgefertigte Harzfilme 11 werden zusammen mit einer Metallfolie 12 einem Rollensystem 13 zugeführt, das durch Einwirkung von Temperatur und Druck eine Verbindung zwischen den Harzfilmen 11 mit jeweils einer Oberfläche der Metallfolie 12 bewirkt. Das erhaltene Harz-Metall-Halbzeug kann anschließend aufgewickelt und als Rollware 14 gelagert werden. Zur Verbesserung der Anhaftung der Harzfilme 11 kann die Metallfolie 12 vor der Beschichtung, bei Bedarf, einer Oberflächenbehandlung und/oder Beschichtung unterzogen werden, wie sie z. B. in Verbindung mit Figur 1 erläutert worden ist.

Im Ergebnis wird ein aufgerolltes Harz-Metall-Halbzeug 14 erhalten, das auf vielfältige Art und Weise in separaten Prozessen weiterverarbeitet werden kann.

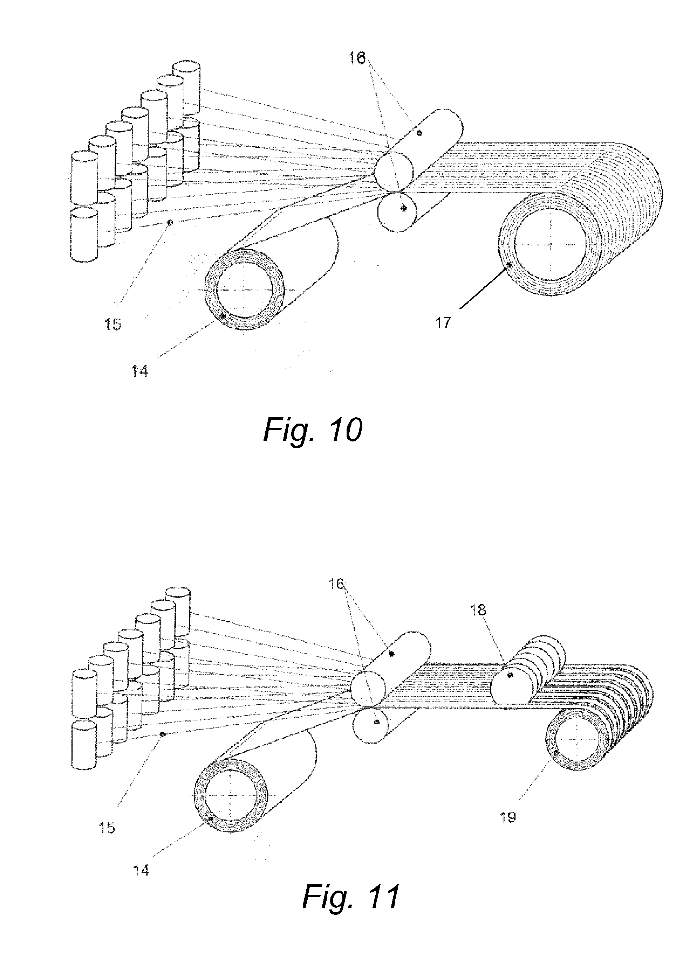

So kann das Harz-Metall-Halbzeug 14 zu Faser-Metall-Prepregs weiterverarbeitet werden. Beispiele hierfür sind in den Figuren 10 und 11 gezeigt.

Eine alternative Vorgehensweise für die Herstellung eines Harz-Metall-Halbzeugs ist in **Figur 9** gezeigt. Dosiersysteme 24, wie sie prinzipiell für die Herstellung von Harzfilmen für Prepregs bekannt sind, benetzen eine oder beide Seiten einer Metallfolie 12 mit Harz. Die benetzte Metallfolie 25 wird einem Walzensystem 13 zugeführt, wobei unter Einwirkung von Temperatur und Druck ein Harzfilm auf der Metallfolie ausgebildet wird.

Diese Vorgehensweise entspricht der herkömmlichen Herstellung von Harzfilmen für Faserverbund-Prepregs. Jedoch wird erfindungsgemäß eine Metallfolie als Trägermaterial eingesetzt, während bei der Herstellung von Harzfolien für Prepregs das Trägermaterial typischerweise Papier oder Kunststoff ist.

Anders als bei herkömmlichen Herstellungsverfahren von Harzfilmen, bei denen nach Fertigstellung der Harzschicht die Harzschicht vom Trägermaterial genommen wird, verbleibt jedoch erfindungsgemäß die Harzfilm auf der Metallfolie, und dient als Metallschicht in einem Hybridlaminat. Im Ergebnis wird eine Harz-Metall-Halbzeug 14 erhalten, das aufgerollt werden kann.

Das Harz-Metall-Halbzeug 14 kann unmittelbar für die Fertigung von Faserverbund-Metall-Hybridlaminaten eingesetzt werden, z. B. durch konventionelle separate Zusammenführung und Laminierung von Harz-Metall-Halbzeug einerseits und Faserverbund-Prepreg andererseits, wobei die besseren Hafteingenschaften genutzt werden können. Wie vorstehend beschrieben, können die Harz-Metall-Halbzeuge 14 vorteilhaft für die Fertigung von Nasslaminaten mit trockenen, nicht mit Harzmaterial vorimprägnierten, Faserhalbzeugen eingesetzt werden.

In **Figur 10** ist schematisch ein Herstellungsverfahren für Faser-Metall-Prepregs darstellt, wobei die vorstehend beschriebenen Harz-Metall-Halbzeuge eingesetzt werden können, wie sie z. B. in Figuren 5, 6, 8 bzw. 9 gezeigt sind. Die Harz-Metall-Halbzeuge 14 werden mittels eines konventionellen Schmelzimprägnierverfahrens mit Endlosfasern 15 versehen. Durch Andrückwalzen 16 wird der Aufbau kompaktiert und ein Benetzen der Fasern durch das Harz der Harzschicht des Harz-Metall-Halbzeugs bewirkt.

Es versteht sich, dass anstelle der Endlosfasern 15 andere Fasermaterialien in die Harzschicht als Verstärkung eingebracht werden können.

Die Metallfolie wirkt dabei gleichzeitig als Trägermaterial, da sie die Abzugskräfte, die bei diesem Herstellungsverfahren auf das Material einwirken, vollständig aufnehmen kann. Dies hat sich als besonders vorteilhaft im Fall von Kurzfasern erwiesen, da ein Auseinanderreißen der abgelegten Fasern durch die Abzugskräfte vermieden wird.

In **Figur 11** ist eine Ausgestaltung des Herstellungsverfahrens nach Figur 10 gezeigt, wobei den Andrückwalzen 16 eine Schneidwalze 18 nachgeschaltet ist, die das erhaltene Faser-Metall-Prepreg in schmale Bänder zerschneidet.

Diese Bänder sind optimale Halbzeuge für Wickelverfahren, Fiber Placement und Pultrusionsverfahren.

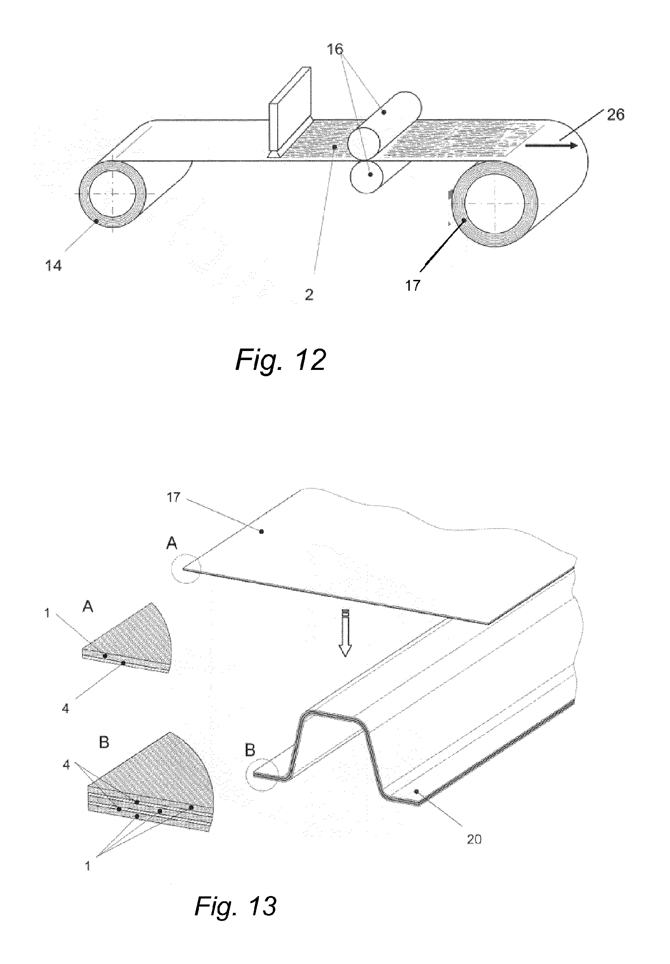

**Figur 12** zeigt ein Herstellungsverfahren eines Faser-Metall-Prepregs mit Kurzfasern 2. Hierbei werden auf der Harzschicht eines Harz-Metall-Halbzeugs 14 mit Hilfe einer Vorrichtung (hier nicht gezeigt) zueinander versetzte Kurzfasern 2 abgelegt. Es kann eine Vorrichtung zum Ablegen und Ausrichten von Kurzfasern eingesetzt werden, wie sie im Prinzip für die Herstellung von Faserverbundwerkstoffen bekannt ist. Das Harz-Metall-Halbzeug 14 mit den darauf abgelegten Fasern 2 wird dann Andrückwalzen 16 zugeführt, die durch Einwirkung von Druck und Temperatur eine Benetzung der Fasern mit dem Harz bewirken und den Verbund konsolidieren. Im Ergebnis wird ein Prepregmaterial 17 aus Metall und mit noch ungehärtetem Harz imprägnierten, gerichteten Kurzfasern 2 erhalten.

Wie durch den in Richtung des Abzugs weisenden Pfeil angedeutet, werden die Abzugskräfte 26, die während dieses kontinuierlichen Prozesses entstehen, vollkommen von der Metallfolie des Harz-Metall-Halbzeugs 14 aufgenommen. Ein Auseinanderreißen der abgelegten und gerichteten Fasern wird dadurch vermieden.

In **Figur 13** ist exemplarisch die Herstellung eines Strukturelements 20 aus einem erfindungsgemäßen Faser-Metall-Prepreg 17 dargestellt.

Das Laminat des Sturkturelements 20 ist aus aufeinander geschichteten Faser-Metall-Prepregs 17 aufgebaut. Diese lassen sich mittels herkömmlicher Umformverfahren um die Längsachse einfach um die Eckradien verformen. Wie aus den Detailansichten A und B ersichtlich ist, behalten die Fasern ihre Orientierung entlang der Längsachse des Strukturelements 20 bei.

Da das Faser-Metall-Prepreg 17 auf beiden Seiten eine Harzschicht aufweisen kann, wie es z. B. in Figuren 3 und 4 gezeigt ist, ergibt sich zwischen den einzelnen Faser-Metall-Prepreglagen untereinander ein gutes Haftvermögen (Tackfähigkeit). Aufgrund des guten Haftvermögen wird ein Verschieben der einzelnen Lagen während der Umformung vermieden und im Ergebnis wird ein guter Zusammenhalt des geschichteten Aufbaus während des Laminierprozesses erhalten.

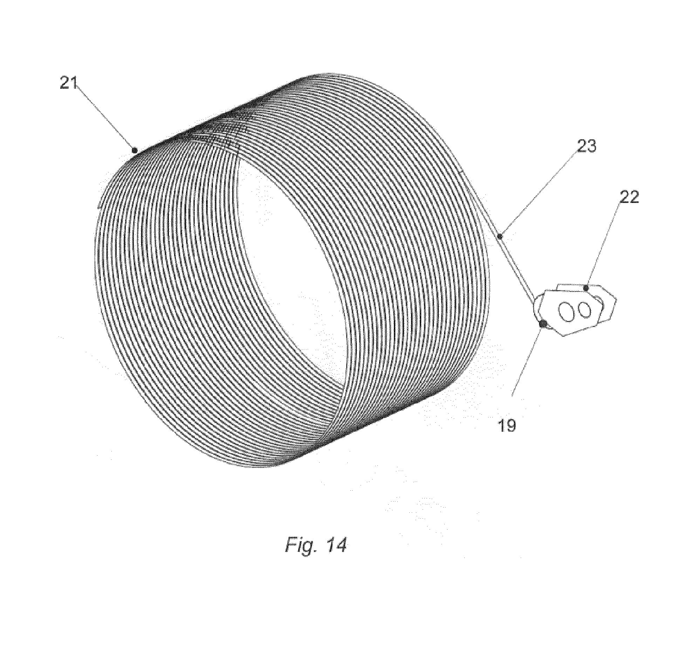

Eine weitere exemplarische Verarbeitungsmöglichkeit der erfindungsgemäßen Faser-Metall-Prepregs ist in **Figur 14** gezeigt, wobei in diesem Fall ein rotationssymmetrisches Bauteil 21 mittels Wickelverfahren hergestellt wird.

Schmale Bänder 23 des Faser-Metall-Prepregs in Rollenform 19, wie sie z. B. nach dem Verfahren nach Figur 11 erhalten werden können, werden mithilfe eines Ablegekopfes 22 mittels Automatic Fiber Placement oder einem Wickelverfahren auf eine Form oder einen Wickeldorn (hier nicht gezeigt) aufgebracht. Das Haftvermögen des erfindungsgemäßen Halbzeuges kann dabei durch Erwärmung am Ablegekopf 22 erhöht werden.

Die Erwärmung kann mittels einer beliebigen hierfür bekannten Maßnahme erfolgen, wie z. B. mithilfe einer Flamme, Heißluft oder über Induktion.

In den vorstehend beschriebenen Beispielen für Ausführungsformen wurde die Metallschicht 4 jeweils mit Grenzschichten 5 und Primerschichten 6 dargestellt. Diese dienen der Verbesserung der Haftung, sind jedoch nicht zwingend erforderlich. Je nach Anwendung können auch nur eine Oberflächenvorbehandlung vorgesehen sein oder nur Primerschichten eingesetzt werden.

Die vorliegende Erfindung stellt ein Halbzeug für die Herstellung von Strukturelementen aus Faserverbund-Metallhybridlaminat zur Verfügung, mit denen die Herstellungsverfahren einfacher und flexibler möglich sind, zudem die Kosteneffizienz in der Fertigung und die Qualität der Faserverbund-Metallhybridelaminate erhöht werden kann, und die insbesondere auch für sehr dünne Metallschichten geeignet sind.

### Bezugszeichenliste

| | |
|---|---|
| 1 | Faserverbundschicht (Schicht aus mit einem noch nicht ausgehärteten Harz vorimprägnierten Fasern) |
| 2 | Kurz-, Langfasern |
| 3 | Endlosfasern |
| 4 | Metallschicht |
| 5 | Grenzschicht |
| 6 | Primerdeckschicht |
| 7 | Schutzfolie |
| 8 | Schicht aus ungehärtetem Harz |
| 9 | Perforation |
| | |
| 10 | mehrschichtiger Aufbau |
| 11 | Harzfilm |
| 12 | Metallfolie |
| 13 | Rollensystem |
| 14 | Harz-Metall-Halbzeug |
| 15 | Endlosfasern |
| 16 | Andrückwalzen |
| 17 | Faser-Metall-Halbzeug (Faser-Metall-Prepreg) |
| 18 | Schneidwalze |
| 19 | geschnittene Bänder |
| | |
| 20 | geformtes Bauteil |
| 21 | rotationssymmetrisches Bauteil |
| 22 | Ablegekopf |
| 23 | schmale Bänder aus Faser-Metall-Halbzeug |

## Patentansprüche

1. Halbzeug für die Herstellung von Faserverbund-Metallhybridlaminaten,
**wobei** das Halbzeug mindestens eine Metallschicht (4) aufweist, und auf mindestens einer Seite der Metallschicht (4) ein härtbarer, aber noch ungehärteter Harzfilm (1) aufgebracht ist, wobei die Metallschicht (4) und der Harzfilm (1) miteinander verbunden sind.

2. Halbzeug nach Anspruch 1,
**wobei** in mindestens einem Harzfilm (1) Fasermaterial eingebracht ist.

3. Halbzeug nach Anspruch 1 oder 2,
**wobei** die Oberfläche der Metallschicht (4), auf der ein Harzfilm (1) aufgebracht ist, oberflächenbehandelt ist.

4. Halbzeug nach einem der vorstehenden Ansprüche 2 oder 3,
**wobei** das Fasermaterial gerichtete unidirektionale Kurzfasern (2) oder gerichtete unidirektionale Endlosfasern (3) ist.

5. Halbzeug nach Anspruch 2,
**wobei** das Fasermaterial Kurzfasern (2) mit einer Länge von 1 mm bis 5 mm ist.

6. Halbzeug nach Anspruch 4,
**wobei** die Endlosfasern (3) ausgewählt sind unter Kohlenstofffasern, Glasfasern, Aramidfasern und Borfasern.

7. Halbzeug nach einem der vorstehenden Ansprüche,
**wobei** die Metallschicht (4) aus Titan, eine Titanlegierung, Stahl oder einer Kobaltlegierung ist.

8. Halbzeug nach einem der vorstehenden Ansprüche,
**wobei** die Metallschicht (4) eine Dicke zwischen 0,01 mm und 0,2 mm hat.

9. Halbzeug nach einem der vorstehenden Ansprüche,
**wobei** eine oder mehrere der Metallschichten (4) Perforationen (9) aufweist.

10. Halbzeug nach einem der vorherstehenden Ansprüche,
**wobei** die Verbindung zwischen dem Harzfilm (1) und der mindestens einen Metallschicht durch Einwirkung von Wärme und/oder Druck bewirkbar ist.

11. Verfahren zur Herstellung eines Halbzeuges nach einem der vorstehenden Ansprüche 1 bis 10,
**wobei** in einem kontinuierlichen Prozess das Metall für die Metallschicht (4) und der härtbare, noch ungehärtete Harzfilm (1) zusammengeführt und durch Einwirkung von Wärme und Druck kompaktiert und miteinander verbunden werden.

12. Verfahren nach Anspruch 11,
**wobei** zusätzlich vor der Kompaktierung auf dem Harzfilm (1) ein Fasermaterial abgelegt wird und das Fasermaterial bei der Kompaktierung mit dem Harzmaterial des Harzfilms (1) imprägniert wird.

13. Verfahren nach Anspruch 11 oder 12,
**wobei** die Ausgangsmaterialien als Rollware bereitgestellt werden.

14. Verfahren nach einem der vorstehenden Ansprüche 11 bis 13,
**wobei** das erhaltene Halbzeug zur Rollware aufgerollt wird.

15. Verfahren nach einem der Ansprüche 11 bis 14,
**wobei** freie Oberflächen einer Harzschicht (1) vor Aufrollen mit einer Schutzfolie (7) abgedeckt werden.
